(19) **Europäisches Patentamt**

**European Patent Office**

**Office européen des brevets**

(11) **EP 0 967 440 A2**

(12) **EUROPEAN PATENT APPLICATION**

(43) Date of publication:
**29.12.1999 Bulletin 1999/52**

(51) Int Cl.⁶: **F23N 5/08**

(21) Application number: **99401544.4**

(22) Date of filing: **22.06.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Von Drasek, William Anthony**<br>  **Oak Forest, IL 60452 (US)**<br>• **Bodelin, Pierre**<br>  **92170 Vanves (FR)**<br>• **Jurcik, Benjamin**<br>  **78470 St. Rémy les Chevreuses (FR)** |
| (30) Priority: **25.06.1998 US 90635 P**<br>           **19.05.1999 US 314759** | |
| | (74) Representative: **Vesin, Jacques et al**<br>**L'AIR LIQUIDE, S.A.,**<br>**Service Propriété Industrielle,**<br>**75, Quai d'Orsay**<br>**75321 Paris Cédex 07 (FR)** |
| (71) Applicant: **L'AIR LIQUIDE, SOCIETE ANONYME POUR**<br>**L'ETUDE ET L'EXPLOITATION DES PROCEDES GEORGES CLAUDE**<br>**75321 Paris Cédex 07 (FR)** | |

(54) **Optical monitoring and control system for oil combustion**

(57)    Methods and apparatus are presented for monitoring and/or controlling liquid fuel burners. Observed flame radiation can be correlated with the quality of liquid fuel atomization and with burner operating conditions such as stoichiometry or firing rate. This information can then be used for monitoring the status of the burner operating conditions or be used in a feedback loop for liquid fuel burner control.

**FIG. 1**

## Description

### Cross-reference to related Applications

This application is related to assignee's provisional application no. 60/090635, filed June 25, 1998, which is incorporated by reference herein.

### Background of the Invention

#### 1. Field of the Invention

This invention relates to the field of combustion. In particular, the invention relates to monitoring and/or controlling oil combustion by viewing the flame.

#### 2. Related Art

Flame characteristics such as stability, overall geometry, pollutant levels, for example, NOx and soot, temperature and species profiles, heat transfer profiles and overall combustion efficiency in two-phase flow systems using a liquid fuel and a gaseous oxidizer are dependent on the mixing between the fuel and oxidizer. Typically, the combustion occurs by the reaction of the gaseous oxidizer and the atomized liquid fuel. As the vaporization rate, droplet trajectories and size are directly controlled by the mechanism used to break the liquid fuel stream into the resulting droplets, the flame is strongly effected by the performance of the atomizing device.

There are a number of general classes of atomizers available for breaking a liquid stream into a droplet stream including ultrasonic atomization, nebulizers, pressure atomizers, two-fluid atomizers and rotary devices.

The atomizing injectors typically used on industrial furnaces can be classified under two main categories: pressure atomizing injectors and multiple-fluid injectors often referred to as pneumatic atomizers. In pressure atomizing injectors only liquid passes through the injector and atomization results from the pressure drop across the injector. In this case the droplet diameter is strongly correlated to the hole exit diameter. Whereas atomization by multiple fluid injectors utilizes the kinetic energy of a gaseous medium to break up the liquid stream into the desired spray having characteristic droplet diameter, trajectory, and spray pattern.

For either method of fuel atomization, the spray attributes such as droplet size distribution, trajectory, and spray geometry are dependent on the injector design and operating conditions. These attributes associated with the atomization spray directly effect the flame characteristics such as overall geometry, luminosity, momentum, and temperature profile.

The performance of fluid assisted and mechanical atomizers may change with time due to a number of factors such as:

a. A buildup of carbon within the atomizer results from the thermal breakdown of the fuel oil. The buildup of carbon alters the flow pattern of the oil changing the atomization results and hence the flame characteristics. Such a change may lead to variations in the flame geometry, heat release, refractory temperature, and the like, which is not desired in the process. The buildup of carbon may eventually lead to the plugging of the atomizer.

b. A change in flow rate or pressure of the atomization fluid (for assisted atomizer) might occur due to external variations in the process. These parameters may not be controlled or monitored on a burner by burner basis in a furnace having multiple burners. As the pressure and/or atomization fluid flow rate changes the characteristics of the atomization will change and consequently the flame characteristics will change.

c. Plugging or encroachment of material from the furnace to the vicinity of the atomizer from volatile, species, dripping of glassy material or any other external furnace based modification of the atomizer.

d. Internal plugging in mechanical atomizers can occur due to oil filter degradation.

e. Droplet size on mechanical atomizers is controlled by the exit hole diameter in mechanical atomizers. After long-term operation the exit hole diameter can increase due to the velocity and shear forces imposed by the liquid resulting in atomization quality change.

The atomization nozzles typically used in industrial processes, for example, glass melting furnaces, are pneumatic atomizers. This class of atomizer uses the kinetic energy of the gas to ensure good disintegration of the liquid. The interaction between the jets of liquid and gas in a pneumatic atomizer can take place inside or outside the atomizer. For either case, degradation of the spray quality thereby changing the flame characteristics can result due to carbon buildup occurring within or around the nozzle. The buildup of carbon in the nozzle results from the breakdown of hydrocarbon oils due to heat transfer from the process to the nozzle. A small amount of buildup on the nozzle acts as a catalyst accelerating further carbon buildup ultimately leading to severe degradation of the nozzle resulting in an unstable or poor quality flame.

For nozzle degradation prevention, either a routine maintenance schedule is followed or routine visual inspections are performed. Routine maintenance requires periodic cleaning of the injector at a frequency sufficiently high that the performance on the atomizer does not significantly change. Alternatively the operator may conduct routine visual inspections and clean the injector when the flame characteristics are abnormal based on the operator's perception of good flame characteristics. Both of these methods fail if nozzle degradation occurs before a scheduled or impromptu inspection. In this case, detection of the problem may only occur from monitored process parameters, such as a change in temperature or exhaust emissions composition. Failure to detect the problem nozzle could result in damage to the injector or process, effect process quality and production rate, and/or effect pollutant emissions.

Traditional oxygen-fuel oil burners used in industrial furnaces (such as glass, ferrous, non-ferrous melting furnaces) use a thermocouple (TC) sensor to monitor the performance of the atomizer. The TC is typically positioned in the atomizing medium path near the fuel oil injection nozzle. The normal temperature of the atomizing media before combustion is close to the ambient temperature. For irregular or undesirable flame characteristics, the temperature reading from the TC would change from the baseline reading. If the TC reading falls below or above a tolerance level, for example, ± 10°F, the burner is removed for inspection. The drawback with this technique is its lack of sensitivity for detecting the onset of the atomizing nozzle degradation and no correlation between the temperature and the resulting flame characteristics can be made. Therefore when a temperature change is observed, severe nozzle degradation has already occurred.

There exists a need in the liquid fuel combustion art for an inexpensive, continuous monitoring method to follow the atomization characteristics. One method would be visual monitoring of the process flames using one or several endoscopes that consists of a water-cooled lens tube and video camera. There are several disadvantages of visual monitoring techniques. One or several optical access ports are required. The location of such ports can be critical and installation difficult or not feasible. Use of one endoscope to view many burners simultaneously has poor spatial resolution making detection of small changes in the flame emission difficult to detect. In addition, visual monitoring systems are limited to the visible wavelength region unless special lens systems and cameras are used. Such special equipment and modifications are costly. Finally, to detect changes in the atomization spray, either an operator viewing images determines the atomization quality based on his perception or the images are processed through a computer algorithm, for example, image pattern recognition with a database of varying flame characteristics.

The combustion between a fuel and oxidant and the resulting radiation emitted due to the highly exothermic reactions is one of the most characteristic features of the flame. Since the flame attributes are effected by the atomization characteristics it is expected that the radiation emitted by the flame would also be dependent on the atomization. Monitoring the flame radiation can provide indirect information on the operating conditions of the burner, such as stoichiometry, power, and atomization quality. However, implementing emission monitoring instrumentation on industrial burners is in practice difficult due to a number of problems. First, optical access is necessary which requires positioning viewports near the burners in strategic locations. Second, the excessive heat from the process environment generally requires the use of water-cooled or high flow rate gas cooled probes.

In U.S. Pat. No. 5,126,721 and an improved variation of this patent under U.S. Pat. No. 5,424,554 describes the use of monitoring the flame radiation for oil fired constant power heating units. In the U.S. Pat. No. 5,126,721 the objective of the flame monitoring was to provide an indication for the optimal combustion air. The basic principal relied on monitoring the flame emission intensity using a single broadband wavelength detector, e.g., cadmium sulfide photocell. In this application deviation of a set optimal flame brightness would alert home owners that service is required. U.S. Patent 5,424,554 uses this same principle for monitoring the flame radiation as U.S. Pat. 5,126,721 but with an advanced circuitry allowing discrimination between burner cycling as found in home heating units.

A drawback in using broadband wavelength detection is the limitation of detecting changes at different wavelengths. The wavelength dependence of the monitored intensity can be useful in identifying operating conditions of the flame. In home heating units (concerned by US 5,424,554 and US 5,126,721), the burner power is constant as opposed to industrial furnaces where the burners can show large variations in firing rates (turn down ratio). Since variations in both stoichiometry and firing rate are commonly found on industrial fuel-oil combustion processes, these effects on the emission intensity must also be accounted for. Monitoring only a single feature of the emission spectra limits the information available to account for such variations in the operating conditions. The use of multiple wavelength monitoring was illustrated in U.S. Pat. No. 5,829,962 for determining stoichiometry and power from industrial natural gas flames. In addition, caution is needed when broadband and/or single wavelength detection is used to ensure that the observed signal is from the source (flame) and contributions from radiating hot walls or melted material is negligible.

To overcome the problems detailed above, one object of this invention is to monitor the intensity of the flame radiation at specific wavelength regions (including UV region) and relate the observed intensity to the performance of the atomizer. In addition, the overall combustion state, e.g., stoichiometry and firing rate can also be related to the observed emission intensity at specific wavelength bands.

## Summary of the Invention

The apparatus and methods of the present invention solve many of the problems with previously known devices and methods. A continuous in-situ monitoring technique is presented based on the flame radiation spectral features. Using the inventive methods observed changes in the atomization spray can be detected alerting the operator of potential problems. The combination of fast time response and sensitivity for detecting changes in the flame provides a reliable alternative to prior art methods. In addition, the invention presents an apparatus for monitoring characteristics of the spray, hence the combustion. In addition to monitoring the atomization quality, information on the stoichiometry and power of the oil burner can be determined from the flame radiation.

A primary objective of the present invention is to provide methods and apparatus to monitor and, preferably, control the performance of an oil burner, where performance may refer to atomization quality, stoichiometry and/or power.

A first aspect of the invention is a method of controlling a liquid fuel burner, the method comprising the steps of:

a) viewing the radiation emitted by a flame from the combustion of a liquid fuel (preferably an oil, more preferably a hydrocarbon oil) with an oxidant (preferably oxygen-enriched air) employing means that is incorporated within the burner itself;
b) optically transporting the observed flame radiation into an optical processor, the optical processor creating an optical signal;
c) processing the optical signal and relating the optical signal to burner operating conditions; and
d) producing an electrical signal based on the burner operating conditions.

Preferably the produced electrical signal either alerts an operator of the burner operating conditions, allowing manual adjustment of the burner, or, more preferably, the electrical signal controls the operation of one or more actuators which in turn allow manipulation of one or more burner fluid flows of an individual or multiple burners. Flow rate or pressure, for example, of fuel, oxidant, or atomization gas, may be manipulated. The atomization gas may be selected from the group consisting of steam, air, oxygen, oxygen-enriched air, impure oxygen produced from various oxygen production plants, or any combination or mixture of these gases.

In addition, the electrical signal that relates the status of the atomization quality can be used to initiate the introduction of an alternative fluid into the burner as a means of cleaning the fuel oil injector. When the electrical signal indicates poor atomization, a control procedure would stop the flow of fuel oil and switch to an alternative fluid for cleaning. This alternative fluid may consist of an inert gas, steam, reactive gas, or two-phase fluid. For gas introduction, either inert or reactive gas could be used. Examples of inert gases would be $N_2$ or Ar, or mixtures thereof, either ambient or preferably heated. The inert gas would be injected into the lance at high pressure to remove any blockages caused by carbon deposits or process material. Reactive gases preferable oxidizers such as $O_2$ (from about 20% to about 100%, molar basis), $O_3$, $F_2$, HF, and the like, or combinations of two or more of these could be used to remove deposits not only by impact but also reacting with the deposit material to produce a gaseous phase species that can be easily transported out of the injector. The basic overall reactions for the different possible oxidizers are as follows:

$$O2 \text{ or } O3: C(s) + O2 \rightarrow CO, CO2$$

$$F2 \text{ or } HF: C(s) + F2, HF \rightarrow CF4, H2$$

where C(s) represents solid carbon build-up. For highly reactive gases such as F2 and HF the concentration levels should be kept to a minimum, preferably from about 0.1% to about 10%, molar basis.

Two-phase fluids would consist of water or gas having fine particles (dia. < 1 $\mu$m) suspended in the fluid (low particle loading density). The fine particles, for example, $Al_2O_3$, $SiO_2$, or $ZrO_2$ will act as an abrasive when in contact with the deposited material. From the many choices, the preferred fluid used as a means for cleaning the injector will be dependent on the process. Some processes may be sensitive to the addition of particular chemicals restricting the selection to those the process can tolerate.

A second aspect of the invention is an apparatus for controlling a liquid fuel burner comprising:

a) means for viewing radiation emitted by a flame from combustion of a liquid fuel with an oxidant employing means that is incorporated within a burner;
b) means for transporting the observed flame radiation to an optical processor, the optical processor creating an optical signal;
c) an optical processor which receives the optical signal and relates the optical signal to burner operating conditions; and
d) means for producing an electrical signal based on the burner operating conditions.

A third important aspect of the invention is a method for monitoring quality of liquid fuel atomization, the method comprising the steps of:

a) viewing radiation emitted by a flame of a liquid fuel burner, employing means incorporated within the body of the burner;
b) optically transporting the viewed radiation into an optical processor, thereby creating an optical signal representative of the flame characteristics;
c) processing the optical signal and relating the processed optical signal to liquid fuel atomization quality; and
d) generating an electrical signal to alert an operator of the burner status and/or control the atomization gas pressure and flow.

A fourth aspect of the invention is an apparatus for monitoring liquid fuel atomization quality, comprising:

a) means for viewing radiation emitted by a flame from combustion of a liquid fuel with an oxidant employing means that is incorporated within a burner;
b) means for transporting the observed flame radiation to an optical processor, the optical processor creating an optical signal;
c) an optical processor which receives the optical signal and relates the optical signal to liquid fuel atomization quality; and
d) means for producing an electrical signal based on the liquid fuel atomization quality.

A fifth aspect of the invention is an apparatus for monitoring liquid fuel atomization quality and perform corrective action based on the state of the atomization quality, the method comprising the steps of:

a) means for viewing radiation emitted by a flame from combustion of a liquid fuel with an oxidant employing means that is incorporated within a burner;
b) means for transporting the observed flame radiation to an optical processor, the optical processor creating an optical signal;
c) an optical processor which receives the optical signal and relates the optical signal to liquid fuel atomization quality; and
d) means for producing an electrical signal based on the liquid fuel atomization quality;
e) means for switching the fuel oil flow into the injector to an alternative fluid for the purpose of cleaning the injector;
f) means for monitoring the flow of the cleaning fluid for some specified time;
g) means for switching from the alternative cleaning fluid back to fuel oil and continue monitoring the atomization quality.

This invention provides a unique method and apparatus for monitoring the quality of the oil atomization based on the observed flame radiation. The method is robust with a fast time response and general enough for use on industrial process burners. Continuous monitoring of the oil flame provides an indirect continuous monitoring of the atomization spray quality. These and other aspects of the invention will become apparent from review of the following description and appended claims.

**Brief Description of the Drawings**

FIG. 1 represents a schematic block diagram of an apparatus of the invention;
FIG. 2 represents a side elevation view of a prior art burner 100 oil injector (reduced in scale) without any optical access;
FIG. 3 represents the burner in FIG. 2 in which the optical coupling is an optical fiber having one extremity installed parallel to the fuel injector;
FIG. 4 represents expanded view of FIG. 3 encompassing only the region of the oil injector and fiber optic;
FIG. 5 represents an expanded front view of only the region encompassing the oil injector and fiber optic;
FIG. 6 represents top elevation view of a prior art burner 200 oil injector (reduced in scale) without any optical access;
FIG. 7 represents the burner in FIG. 6 in which the optical coupling is an optical fiber having one extremity installed parallel to the fuel injector;
FIG. 8 represents the burner in FIG. 6 in which the optical coupling is an optical fiber having one extremity installed through burner block 30 with the fiber field of view directed toward the fuel oil injector exit;
FIG. 9 represents the burner in FIG. 6 in which the optical coupling is an optical fiber having one extremity installed through burner block 30 with the fiber field of view perpendicular to the fuel oil injector exit;
FIG. 10 represents an oil flame emission spectrum divided by a hot wall furnace background spectrum (no flame present) using the inventive methods and apparatus;
FIG. 11 is a graphical representation for real-time monitoring of the integrated CH and OH, illustrating the relationship between emission signals and atomization pressure;
FIG. 12 is a graphical representation for real-time monitoring of integrated OH signal used for monitoring atomization quality with a selected target value and upper and lower control limits;
FIG. 13 represents the schematic block diagram of FIG. 1 but with the addition of a burner controller and control valves;
FIG. 14 is a graphical representation comparing real-time monitoring of the combustion oxygen using a Neural Network model with conventional flow meter measurement;
FIG. 15 is a graphical representation comparing the effect of atomization pressure on the real-time monitored OH and CH integrated signals for operating the burner at fixed power with number 2 fuel oil;
FIG. 16 is a graphical representation comparing the effect of atomization pressure on the real-time monitored OH and CH integrated signals for operating the burner at fixed power with number 6 fuel oil;

FIG. 17 is a graphical representation for real-time monitoring of integrated OH signal with varying burner power and stoichiometry used for training a neural network model to monitoring atomization quality with changing operating conditions;

FIG. 18 is a graphical representation for real-time monitoring of the atomization quality, based on the model developed using the data displayed in FIG. 17, with varying burner power and; and

FIG. 19 schematic of oil spray monitoring using an external laser light source transported into the burner by fiber optic with a second fiber to monitor scattered light from the oil droplets.

The figures are not to scale and are only representative of actual embodiments.

## Description of Preferred Embodiments

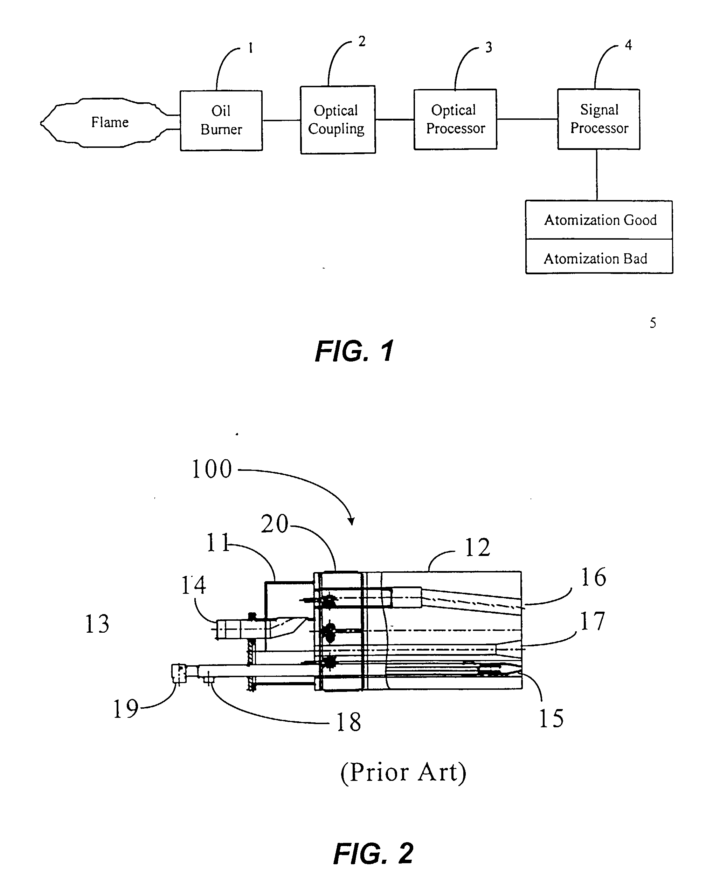

Monitoring the radiation from the combustion of liquid fuels such as hydrocarbon fuel oil and oxidant at selected wavelengths provides a means for determining the characteristics of the flame, in other words, atomization quality, stoichiometry, and power. Implementing a monitoring apparatus on an oil burner requires the following elements illustrated in FIG. 1. The apparatus comprises an optical coupling element 2, preferably a high temperature fiber optic that is preferably an integral part of the burner. The flame radiation is transported to an optical processor 3 selected from the group consisting of a signal detector and bandpass filter combination, for example a photodiode or photomultiplier, a multiplexed system consisting of a plurality of detectors and/or filters, or an optical dispersion element such as a spectrometer. After optical processing of the flame radiation, the resulting electrical signals are analyzed via a signal processor 4, which can be as simple as a voltage comparator circuit or if a more sophisticated level of monitoring is desired a computer may be preferred. Results from the processed electrical signals are converted to an electrical signal, preferably to send to an alarm system 5 to alert operators of potential problems such as poor atomization quality. More preferably the signals may be used to control and adjust the flows either of fuel, oxidant, and/or atomization gas as will be illustrated.

This preferred monitoring control apparatus can be implemented on each burner installed on an industrial furnace allowing individual monitoring and optimization of each burner.

FIG. 2 illustrates a prior art burner 100 known under the trade designation ALGLASS™ FC; available from Air Liquide America Corporation, Houston, Texas, and more fully described in U.S. Pat. No. 5,833,447, incorporated by reference herein. Burner 100 has installed therein a liquid fuel injector and atomization device 13 known under the trade designation Trident™, also available from Air Liquide America Corporation in Houston, Texas, and more fully described in U.S. Pat. No. 5,833,447, incorporated herein by reference. The oil injector 13 is mounted onto a housing 11 that has an inlet for oxidizer gas 14. Housing 11 is mounted to refractory block 12 using clamping assembly 20. A fuel oil inlet 19 and atomizing gas inlet 18 are located on injector 13 with the atomized oil spray outlet at 15. Oxidizing gas exits injector 16 from refractor block 12 and injector 17 is used only for gas phase fuel applications, e.g., natural gas.

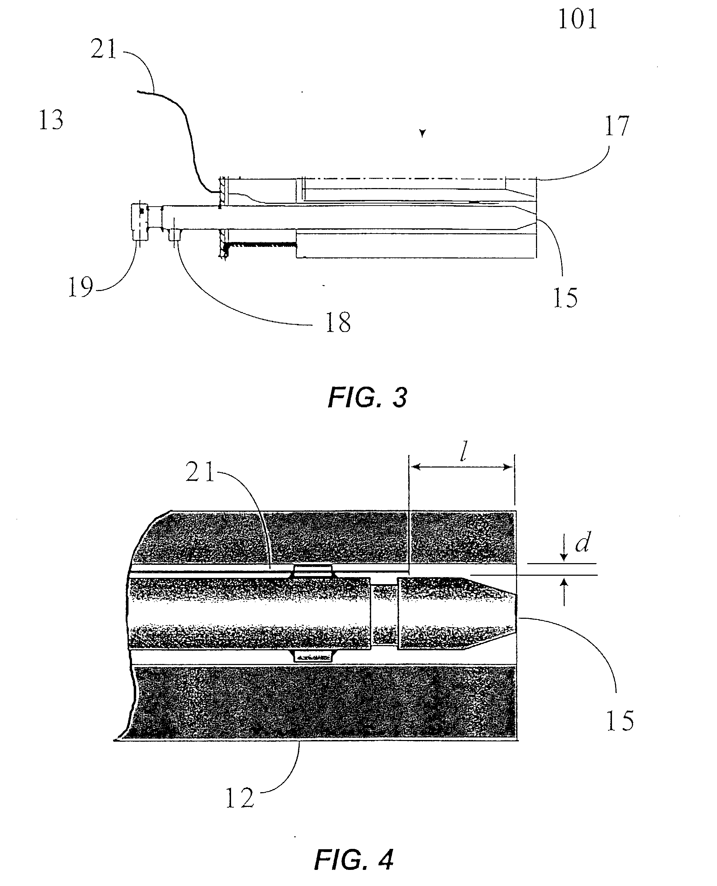

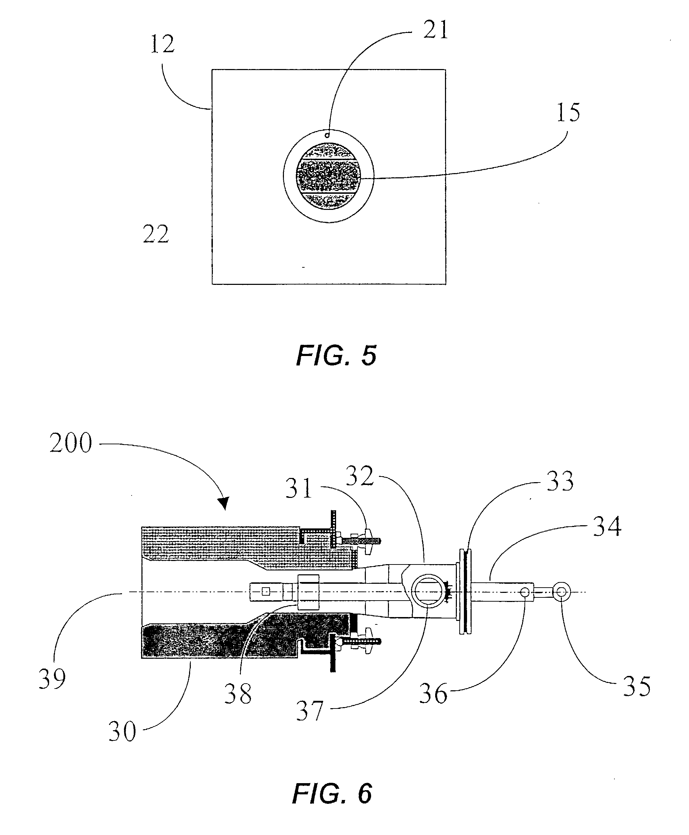

FIG. 3 illustrates only the lower section of a burner 101 similar in all respects to the burner 100 of FIG. 2, except including a fiber optic 21 positioned through the burner housing and positioned along oil injector 13. Fiber optic 21 provides means for optical access near the atomized oil spray outlet 15. For atomization quality monitoring it is important to monitor the radiation resulting from the atomized oil spray combustion as close to the atomizing nozzle as possible. Alternatively, the radiation could be monitored by providing optical access through injectors 16 or 17. However, in this case the radiation collected would be from a position far from the atomized oil spray outlet 15, prohibiting the detection of small changes in the atomization quality. Therefore, the preferred placement of fiber optic 21 for this burner geometry is along the injector 13. Cooling of fiber optic 21 is preferably provided by a flow of oxidizer gas that is diverted into the annulus region (see FIG. 5) between oil injector 13 and annulus flow region 22 in refractory block 12. The amount of gas flowing through this area is a fraction of the total oxidizer introduced into inlet 14. The concept of using part of the total oxidizer gas for cooling the oil injector, in particularly the atomized liquid fuel outlet 15, is from the prior art design of U.S. Pat. No. 5,833,447, previously incorporated herein by reference.

The monitoring technique is adaptable to burners of different geometries. FIG. 6 illustrates a prior art burner 200 that differs from the previously described burner 100. Burner 200 known under the trade designation ALGLASS DUAL™, available from Air Liquide America Corporation, Houston, Texas, and more fully described by Bodelin et al., "Fuel Oil Burner Development for High Temperature Melting Applications", American/Japanese Flame Research Committees, 1998 International Symposium, October 11-15, Maui, Hawaii, in U.S. patent application serial number 09/_____, filed _____, both incorporated herein by reference. Burner 200 has installed therein a liquid fuel injector and atomization device 34 known under the trade designation DUAL™, (Bodelin et al.). The oil injector 34 is mounted onto a housing 32 that has an inlet for oxidizer gas 37. Housing 32 is mounted to refractory block 30 using clamping assembly 31. A fuel oil inlet 36 and atomizing gas inlet 35 are locted on injector 34 with the atomized oil spray outlet exiting in burner block 30. The oil injector lance is centered in refractory block 30 with centering tabls 38. Oxidizing gas exits around injector 34 within burner block 30. The fuel oil and oxidizing gas begin to mix inside burner block 30 and exit through opening 39.

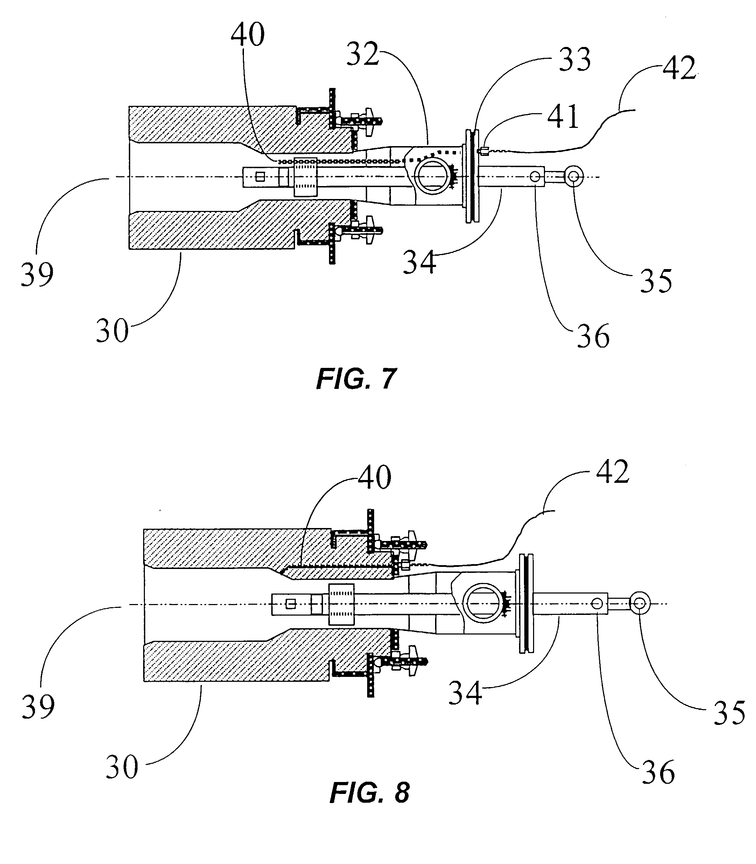

FIG. 7 illustrates burner 201 similar in all respects to the burner 200 of FIG. 6, except including a fiber optic 40 positioned through the burner housing and positioned along oil injector 34. Cooling of the fiber is provided by oxidizing gas flow introduced in 37. Fiber optic 40 is sealed by a compression fitting 41 providing a leak tight seal. After seal 41 fiber optic 40, which is housed in a metal sheath, transitions to flexible sheath 42. Fiber optic 40 provides means for optical access near the atomized oil spray outlet.

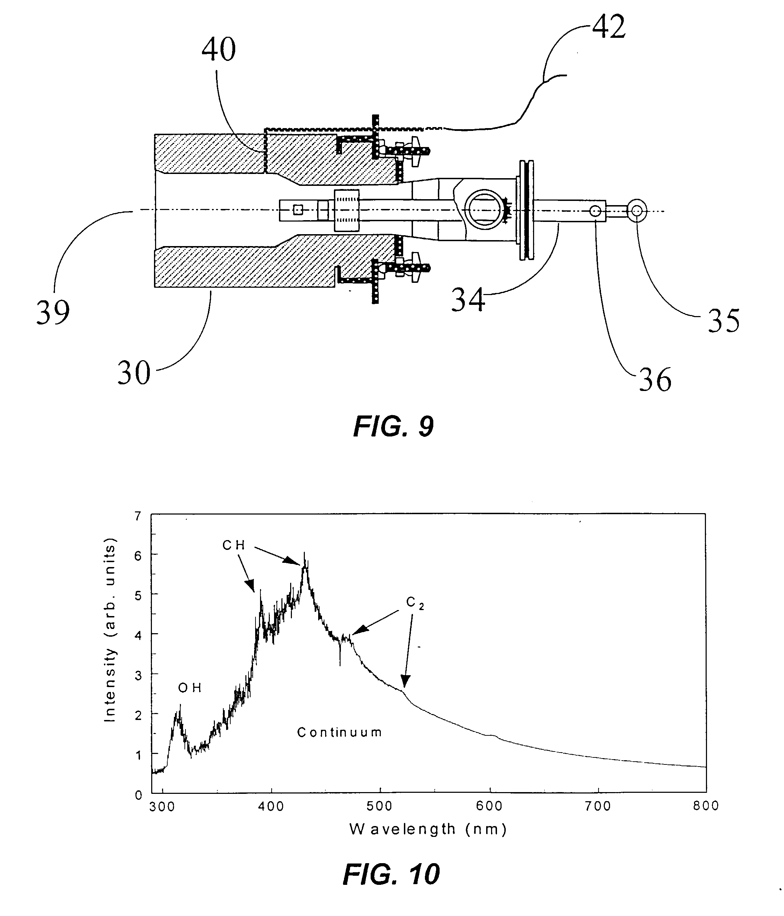

Alternative positions for optical access are shown in FIG. 8 and 9. FIG. 8 illustrates burner 202 having fiber optic 40 positioned in refractory block 30. Fiber optic 40 can be inserted parallel to oil injector 34 similar to FIG. 7 expect in refractory block 30 or positioned such that the optical field of view is directed toward the exit of injector 34 as illustrated in FIG. 8. A similar configuration is illustrated in FIG. 9 showing burner 203 having the fiber optic positioned perpendicular to the fuel oil injection 34.

For the configurations illustrated here, optical access is integrated directly into the burner. Fiber optic cables are used in these illustrations but conventional optic components consisting of lens and reflectors can be used when burner geometry does not restrict their use. Whichever method is used, its important to monitor the radiation resulting from the atomized oil combustion as close to the atomizing nozzle as possible.

The optimum position of fiber optic 21 or 40 illustrated in the different burner geometries, is a balance between the burner geometry, heat transfer to the fiber or other optical components, and the detection system used, in other words, type of detector. Positioning of the fiber should be set at the location where the observed signal is sufficiently strong to monitor changes at the spectral region or regions of interest.

Radiation emitted from a flame is incoherent and is emitted in space over $4\pi$ radians. The radiation flux, defined as the radiation intensity per unit area (W/cm$^2$) reaching a detector, is a function of the optical collection system used plus the burner geometry. One can view the problem simply as a light source being the flame and a radiation collection system being the burner (where the burner consists of complete assembly of refractory block and metallic components) with all associated optical components, and the detector. The radiation flux from the flame is dependent on the operating conditions such as firing rate, stoichiometry, fuel composition, oxidant composition, and atomization characteristics. For a given radiation flux from a flame the collection efficiency through the burner needs to be examined in detail, to choose the appropriate optical system and detector. Since the geometry of oil burners can vary greatly, as illustrated in FIG. 2 and 6, the burner geometry dictates the design used for collecting the flame radiation.

For the application presented on the modified burner 101 in FIG. 3, the burner geometry effecting the collection efficiency is illustrated in the expanded side view in FIG. 4. The position of the atomized liquid fuel outlet 15 and fiber optic 21 are illustrated in more detail in FIG. 4. In this burner geometry the fiber optic is preferably positioned in the annulus flow region 22 illustrated in FIG. 5 at a distance $l$ from the burner hot face (FIG. 4, area facing the flame and furnace). The second critical dimension is $d$, the distance between the atomizer 13 and refractory wall defining injector 17 (see FIG. 4). For this case

$$d = r_{refractory\ hole} - r_{oil\ injector}$$

where subscript on r refers to the radius of either the atomized liquid fuel oil injector 13 or channel in the refractory block defining injector 17. The distance $d$ between the injector and refractory wall effectively acts as an aperture limiting the radiant flux reaching fiber optic 21. Whereas the distance $l$ obeys the inverse square law, where radiation intensity is proportional to $1/l^2$. If the dimension of $d$ is large enough, greater than ~6 mm, and line-of-sight optical accesses can be obtained, a simple window and lens combination could be used in place of the fiber optic. The 6 mm dimension represents commercially available optical components. Custom made components could be smaller.

Another aspect to consider is the diameter of the optical fiber to use. Since the burner imposes geometric constraints on the field of view that limits the radiation throughput, some enhancement can be obtained by using a larger diameter fiber. The collection efficiency of the fiber is dependent on the fiber diameter and numerical aperture (NA) (The numerical aperture (NA) can be related to the f-number, $f_\#$, by the simple relation $f_\# = \frac{1}{2}$ NA, which is a characteristic of the fiber material used that sets the acceptance angle for light to propagate through the fiber.) For high temperature applications and UV transmission, a fiber with a silica core and cladding is preferred. These fibers have acceptance angles of 25° (NA =.22) discriminating against light rays incident on the fiber at angles greater than 25°. Single fibers with diameters as large as 1.5 mm are available (Fiber Optic Systems, Inc., Simi Valley, CA.) however large diameter fibers are mechanically rigid and susceptible to breaking. If a larger diameter fiber is needed, the preferred method is using a bundle of small diameter fibers typically 5-200 μm diameter each to make up a larger diameter single fiber.

For the detector, or optical processor 3, anyone one of a variety of detectors may be used, for example photodiodes, solar blind photodiodes, or photomultiplier tubes. The choice of optical processor is defined by the wavelength of interest and the radiant flux reaching the optical processor. For example, if the irradiance reaching a photodiode detector is at the level of the dark current of the detector, one may opt to use high sensitivity detectors such as a photomultiplier or avalanche photodiode detector.

To address the issue of cooling fiber optic 21 and 40 to avoid thermal damage, a measure of the temperature along the atomized liquid fuel injector 13 and 34 at different locations from the atomized liquid fuel injector exit for a given geometry and range of gas flow rates will provide a save estimate for positioning the fiber. Computational fluid dynamic modeling including heat transfer simulations for a given geometry and range of flow conditions is one preferred method of estimating the optimal positioning the fiber. Once a location for the fiber is determined, the optical system can then be tuned for maximum transmission.

In the preferred embodiments illustrated in FIG. 3 and FIG. 4 the fiber optic is mounted parallel to the liquid fuel injector, but this is not strictly required. The parallel configuration provides optical access near the flame for radiation monitoring.

The choice of optical fiber material used depends on the spectral region of interest. Useable optical fibers preferably have a diameter range from 10 to 1500 $\mu$m. The preferred diameter is depended on the method of optical processing, which can be dependent on the light collection efficiency and resolution. The preferred fiber material is quartz with a stainless steel sheath outer layer. The quartz fiber and stainless sheath are bounded using a high temperature bonding material, such as the bonding material known under the trade designation ALUMABOND 484, available from East Coast Sales Company, Inc., of Briarcliff Manor, New York. A seal between the fiber and the burner housing can be made with a compression o-ring fitting or other fiber optic feedthrough methods such as a crimping method developed by Three E Laboratories, Inc. of Lansdale, PA.

In the following example the flame emission was monitored using the configuration illustrated in FIG. 3. Flame radiation was collected by the high temperature 100 $\mu$m dia. fiber optic positioned along the top of the liquid fuel injector 13. The position of the fiber end with respect to the atomized liquid fuel outlet 15 was as close as possible without causing damage from excessive heat. For example, using the design rules outlined above it was found that for $d$ of 6 mm and $l$ between 5 and 15 cm (see FIG. 4) from the hot face of the block, with a cooling gas velocity between 30 and 20 m/s provided a good balance between optical transmission and cooling of the fiber.

For burner geometry indicated in FIG. 3, the working distance between 5 and 7 cm from the atomized liquid fuel outlet 15 was found usable. At the other end of optical fiber 21 was attached an Ocean Optics model PC 1000 PC spectrometer board with a spectral range of 290-800 nm. The spectral resolution from this spectrometer is dependent on the fiber diameter. For this case, the 100 $\mu$m dia. fiber resulted in a spectral resolution of 7 nm which is sufficient to resolve emission bands from most diatomic molecules found in flames.

FIG. 10 illustrates the observed emission spectrum from the fiber positioned 7 cm from the atomized liquid fuel outlet 15. The spectrum is a ratio between a spectrum obtained during combustion and one obtained from the hot furnace with no flame present (reference). For the flame spectrum obtained the burner used number 2-grade fuel oil operating at 1100 kW with air as the atomization fluid. The ratioed spectra removals the wavelength dependency of the detector, grating, and fiber optic. From the ratioed spectra characteristic peaks from excited molecular species such as OH (308 nm), CH (432 nm), and $C_2$ (516 & 473 nm ) are clearly identified. These species are superimposed on a continuum resulting partially from soot radiation and recombination reactions such as $CO+O \rightarrow CO_2{}^*$, where $CO_2{}^*$ (*= excited state species) emits over the wavelength range 300-550 nm.

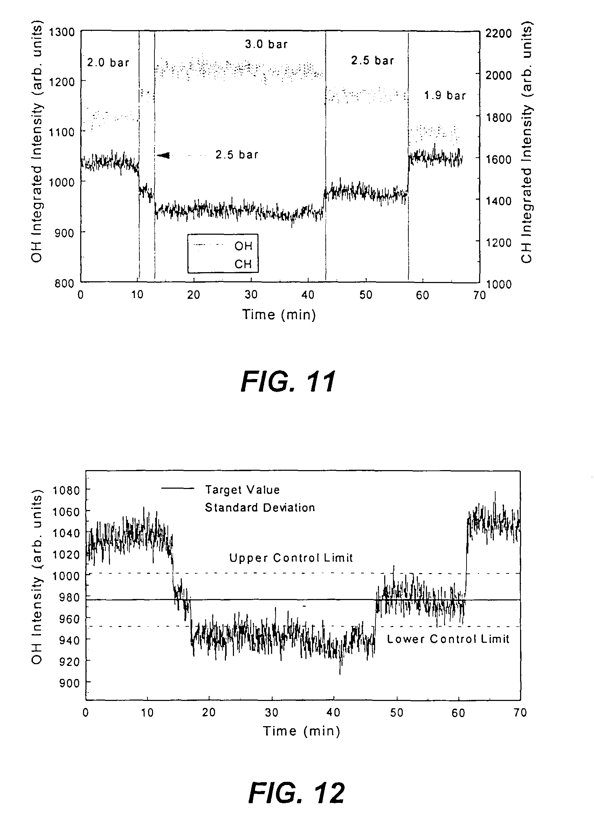

Real-time monitoring of the integrated area of OH and CH bands is illustrated in FIG. 11. Here the sample was collected at 0.58 Hz, which corresponded to a sampling frequency of 150 kHz and averaging 40 spectra. The relationship between the atomization pressure and the observed signal intensity is indicated in Fig. 11 for various constant atomization pressures at different times. Good atomization quality corresponds to high level of atomization, which are correlated to maximum intensity of the OH signal. Monitoring the OH radical is the preferred species since the sensitivity to the surrounding combustion oxidant is small compared with the CH emission, as will be discussed in the second example. In addition, emission from the CH band is not always observed. Therefore, the integrated intensity monitored from the CH spectral region may result from CH or radiation from the continuum. In either case, the information obtained can still be useful as illustrated in the second example.

In the first example, if the desired flame quality is observed for an atomization pressure of 2.5 bar, then average integrated OH signal intensity would be constant and bounded by an upper and lower limit as illustrated in FIG. 12. The setting of the control limits can be made by using statistical techniques such as Shewhart control charts. Deviation of the signal above or below these limits would result in a change in the flame quality caused from some change in the atomization of the fuel. The fuel atomization change may occur from a number of factors such as atomization pressure change, changes in the fuel physical properties, viscosity, or degradation of the atomizing nozzle due to deposition of carbon or heat damage. If any of these effects, or combination of these effects occur, the characteristics of the flame radiation being monitored will result in a deviation above or below the set-point. Once this deviation occurs an alarm to warn the burner operator that a potential problem exists.

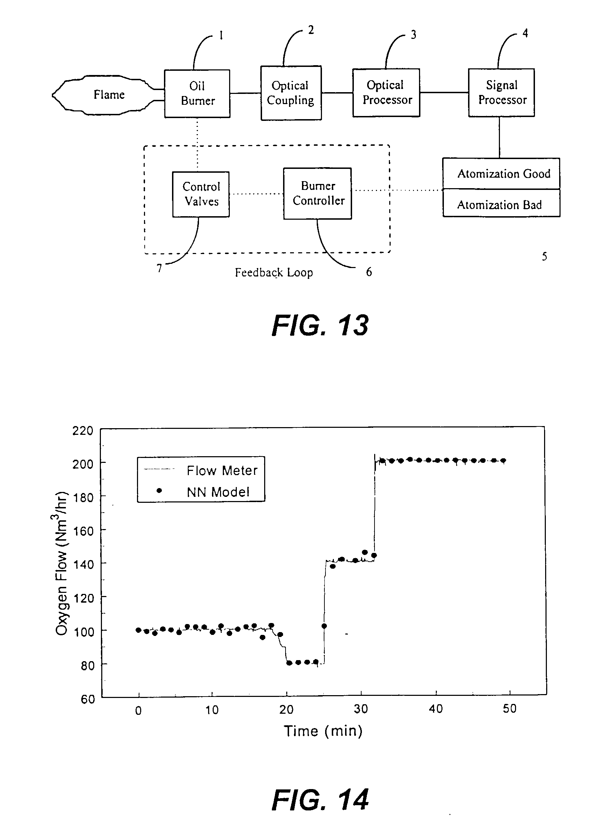

Alternatively, a higher level of control using a feedback loop can be used in the above example. In this case, when the signal level deviates outside the acceptable range control action would be implemented on the process, for example, change atomization pressure to bring the value within range or introduce a self-cleaning procedure. The procedure is similar to that illustrated in FIG. 1 but with the addition of a burner controller 6 and control valves 7 as illustrated in FIG. 13. For the cleaning procedure, the oil flow would have to stopped followed by injection of a cleaning fluid. The cleaning can either be conducted for a specified time or cycled between oil and cleaning fluid using the monitored emission signal as a measure of atomizer cleanliness.

In the second example, global combustion oxygen is monitored using the same monitoring method described above. For this case, the number 2 fuel oil flow was fixed at 77 kg/hr. The global combustion oxygen was determined by constructing a neural network (NN) model using the integrated OH and CH signals and the atomization pressure as model inputs. A comparison between the measured oxygen flow rate and the predicted value from the NN model is illustrated in FIG. 14. Results from the NN model gave an average error of $\pm$ 1.4%. The technique can be used to monitor and/or control the combustion oxygen insuring the local flame is at the desired operating condition, such as fuel-rich or fuel-lean.

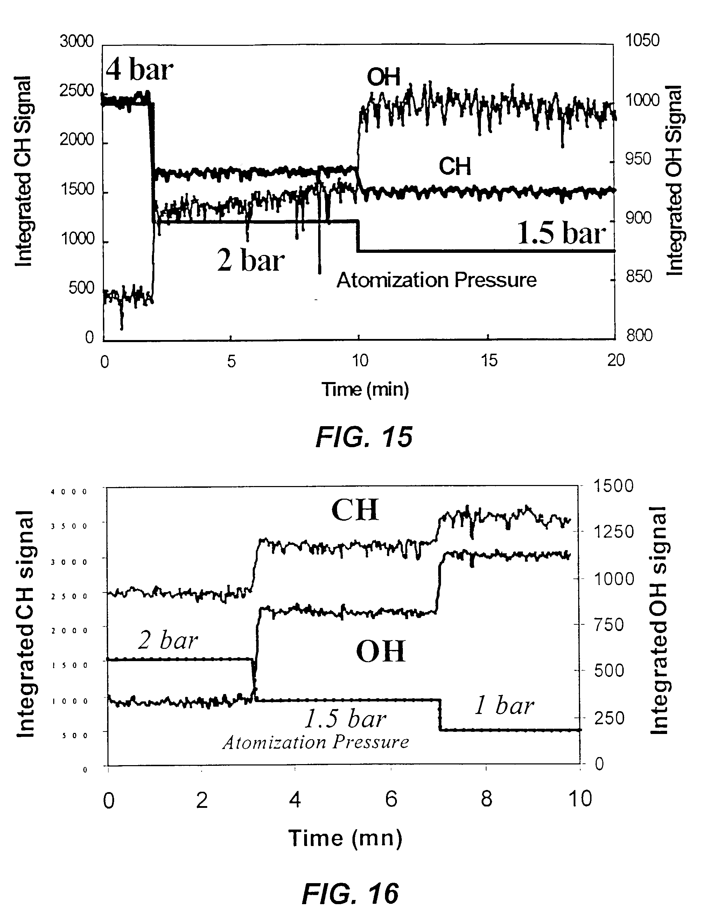

In a third example flame monitoring is conducted on the ALGLASS FC burner with the monitoring configuration illustrated in FIG. 4. Operating the burner at a fixed power of 500 kW with number 2-grade fuel oil the real-time integrated OH and CH signals for various pressures of $O_2$ atomizing gas is shown in FIG. 15. In this case the OH and CH signals show opposite behavior for changes in atomization pressure. Using the same configuration but with heavy number 6-grade fuel oil the OH and CH integrated signals show the same behavior for changes in atomization pressure, as shown in FIG. 16. The trends observed for different fuel grades are observed in burners using different atomizer designs and burner geometries. Therefore, the observed effect is related to the characteristics of the atomized spray that is influenced by the oil grade. By monitoring multiple wavelength regions changes in the oil grade can be detected by tracking the change in the different wavelength regions. For example, the atomization pressure can be changed for a short time (<1min) to monitor the resulting signal changes at the different wavelength regions. If the atomization pressure is decreased from its nominal value and both monitored signals move in the same direction one can conclude a heavier grade of oil is being used. A more sophisticated correlation could be developed relating oil grade to emission intensity at multiple wavelength regions and atomization pressures. Monitoring the emission at a single narrow or broadband wavelength region can not detect these subtle changes.

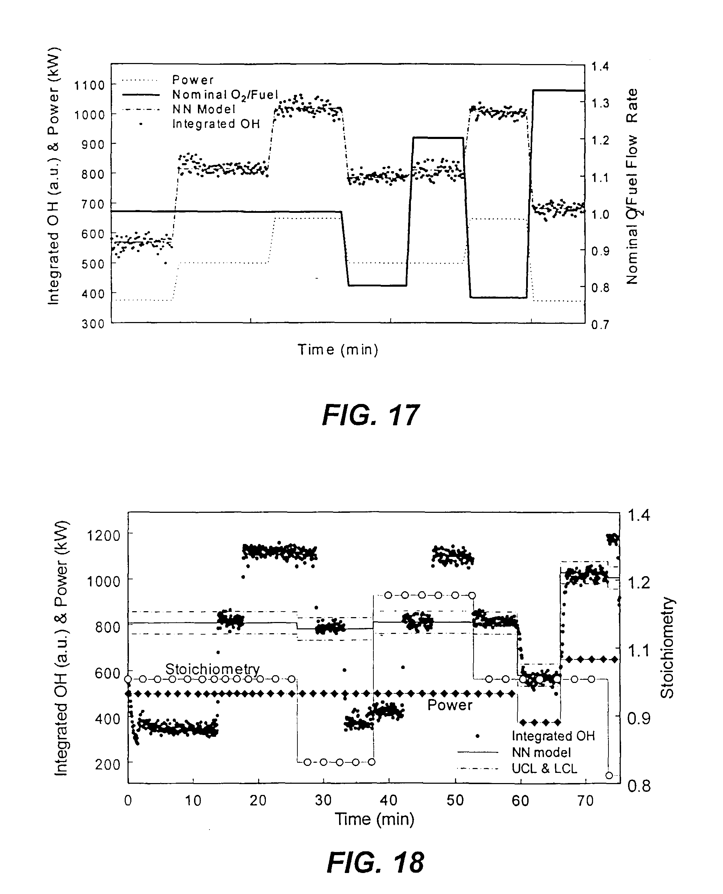

In the fourth example, atomization quality is monitored while varying the burner operating conditions to simulate possible real-world industrial conditions. Since changes in burner stoichiometry and power are typically encountered on industrial processes, the dependence on the integrated emission signal most be accounted for at various conditions. To monitor the atomization quality independent from changes in the overall burner operating condition a model relating the integrated emission signal to power and stoichiometry can be developed. In this example, the burner in FIG. 3 was used with number 6-grade fuel oil and $O_2$ atomization gas operating with varying stoichiometry and power. The real-time integrated OH emission signal was collected for the varying operating conditions and optimum atomization quality. The NN model is trained by using the known power and stoichiometry as input into the network with the measured integrated OH signal as the output. The results for model construction are illustrated in FIG. 17 showing the variations in operating conditions along with the measured and predicted OH emission signal. Once the model is constructed, upper and lower control limits can be applied to determine when atomization quality degrades. FIG. 18 illustrates such a case where the burner power and stoichiometry are varying. Using the stoichiometry and power measured with flow meters as inputs the predicted OH signal level and its corresponding UCL and LCL are compared with the measured values. If the measured value falls outside the bounds set by the UCL and LCL atomization quality has degraded. Afterwards a simple warning signal to the furnace operator can be sent or control action such as adjustment of flows or initiating an automatic cleaning cycle.

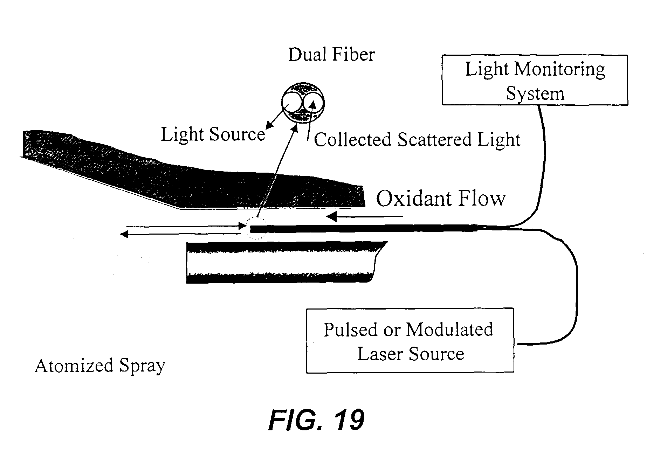

In the last example, atomization quality is monitored by relating the intensity of scattered monochromatic light, preferable from a laser source, by the oil droplets. Here a fiber optic consisting of multiple fibers is introduced into the burner simpler to the configurations illustrated in FIG. 3, 7, 8, and 9. The multiple fibers in its simplest configuration will consist of only two fibers as illustrated in FIG. 19. In this case, one fiber would be coupled to a laser source with the other fiber connected to the optical processing system. Here the optical processing system can consist of a simple detector filter configuration or dispersion element with detector. The laser light source can be continuous or pulsed. For a continuous source a modulating device, e.g., chopper, is preferred to temporally turn the light source on and off. In this configuration, the scattered light collected will consist of flame radiation only and flame radiation plus scattered light from the droplets for one modulation cycle. Subtracting the two signals gives the intensity of scattered light from droplets only, which can then be correlated with atomization quality. For a pulsed light source with a pulse width of less than 10 μsec a gated detection system can be used. This configuration has the advantage of completely blocking out the flame radiation and detecting only the back-scattered light from the droplets. As before, the intensity of the scattered light can be correlated with atomization quality except in this case the light monitored is not originating from the flame. This method of using an auxiliary light source has the advantage of completely removing the dependence of power and stoichiometry from the monitored signal.

Having described the present invention, it will be readily apparent to the artisan that many changes and modifications may be made to the above-described embodiments without departing from the scope of the present invention.

## Claims

1. A method of controlling a liquid fuel burner, the method comprising the steps of:

   a) viewing the radiation emitted by a flame from the combustion of a liquid fuel with an oxidant employing means that is incorporated within the burner itself;
   b) optically transporting the observed flame radiation into an optical processor, the optical processor creating an optical signal;
   c) processing the optical signal and relating the optical signal to burner operating conditions; and
   d) producing an electrical signal based on the burner operating conditions.

2. Method in accordance with claim 1 wherein the produced electrical signal alerts an operator of the burner operating conditions, allowing manual adjustment of the burner.

3. Method in accordance with claim 1 or 2 wherein the electrical signal controls the operation of one or more actuators which in turn allow manipulation of one or more burner fluid flows of an individual or multiple burners.

4. Method in accordance with one of claims 1 to 3 wherein flow rate of fuel, oxidant, or atomization fluid is manipulated.

5. Method in accordance with one of claims 1 to 4 wherein pressure of fuel, oxidant, or atomization fluid is manipulated.

6. Method in accordance with one of claims 1 to 5 wherein the electrical signal controls a sequence of events that shuts off liquid fuel flow by an automated cleaning procedure.

7. An apparatus for controlling a liquid fuel burner comprising:

   a) means for viewing radiation emitted by a flame from combustion of a liquid fuel with an oxidant employing means that is incorporated within a burner;
   b) means for transporting the observed flame radiation to an optical processor, the optical processor creating an optical signal;
   c) an optical processor which receives the optical signal and relates the optical signal to burner operating conditions; and
   d) means for producing an electrical signal based on the burner operating conditions.

8. Apparatus in accordance with claim 7 wherein the means for viewing the radiation emitted by the flame is an optical fiber.

9. Apparatus in accordance with claim 7 or 8 wherein the means for transporting the observed flame radiation to the optical processor is an optical fiber.

10. Apparatus in accordance with one of claims 7 to 9 wherein the means for producing an electrical signal based on the burner operating conditions is a programmable logic controller.

11. Apparatus in accordance with one of claims 7 to 10 wherein the programmable logic controller is connected to an operator control station.

12. A method for monitoring quality of liquid fuel atomization, the method comprising the steps of:

   a) viewing radiation emitted by a flame of a liquid fuel burner, employing means incorporated within the body of the burner;
   b) optically transporting the viewed radiation into an optical processor, thereby creating an optical signal representative of the flame characteristics;
   c) processing the optical signal and relating the processed optical signal to liquid fuel atomization quality; and
   d) generating an electrical signal to alert an operator of the burner status and/or control the atomization gas pressure and flow.

13. Method in accordance with claim 12 wherein the electrical signal controls the operation of one or more actuators which in turn allows manipulation of liquid fuel flow rate.

14. Method in accordance with claim 12 or 13 wherein the electrical signal controls the operation of one or more actuators which in turn allows manipulation of liquid fuel atomization fluid flow rate.

15. Method in accordance with one of claims 12 to 14 wherein the electrical signal controls the operation of one or more actuators which in turn allows manipulation of liquid fuel atomization fluid pressure.

16. An apparatus for monitoring liquid fuel atomization quality, comprising:

   a) means for viewing radiation emitted by a flame from combustion of a liquid fuel with an oxidant employing means that is incorporated within a burner;
   b) means for transporting the observed flame radiation to an optical processor, the optical processor creating an optical signal;
   c) an optical processor which receives the optical signal and relates the optical signal to liquid fuel atomization quality; and
   d) means for producing an electrical signal based on the liquid fuel atomization quality.

17. Apparatus in accordance with claim 16 wherein the means for viewing the radiation emitted by the flame is an optical fiber.

18. Apparatus in accordance with claim 16 or 17 wherein the means for transporting the observed flame radiation to the optical processor is an optical fiber.

19. Apparatus in accordance with one of claims 16 to 18 wherein the means for producing an electrical signal based on the burner operating conditions is a programmable logic controller.

20. Apparatus in accordance with one of claims 16 to 19 wherein the programmable logic controller is connected to an operator control station.

21. Apparatus in accordance with one of claims 16 to 20 wherein the operator control station is remotely accessible.

22. An apparatus for monitoring liquid fuel atomization quality and perform corrective action based on the state of the atomization quality, the method comprising the steps of:

   a) means for viewing radiation emitted by a flame from combustion of a liquid fuel with an oxidant employing means that is incorporated within a burner;
   b) means for transporting the observed flame radiation to an optical processor, the optical processor creating an optical signal;
   c) an optical processor which receives the optical signal and relates the optical signal to liquid fuel atomization quality; and
   d) means for producing an electrical signal based on the liquid fuel atomization quality;
   e) means for switching the fuel oil flow into the injector to an alternative fluid for the purpose of cleaning the injector;
   f) means for monitoring the flow of the cleaning fluid for some specified time;
   g) means for switching from the alternative cleaning fluid back to fuel oil and continue monitoring the atomization quality.

**FIG. 1**

(Prior Art)

**FIG. 2**

**FIG. 3**

**FIG. 4**

FIG. 5

FIG. 6

**FIG. 7**

**FIG. 8**

**FIG. 11**

**FIG. 12**

**FIG. 13**

**FIG. 14**

*FIG. 15*

*FIG. 16*

**FIG. 17**

**FIG. 18**

Dual Fiber

Light Monitoring System

Light Source    Collected Scattered Light

Oxidant Flow

Pulsed or Modulated Laser Source

Atomized Spray

**FIG. 19**